Europäisches Patentamt

European Patent Office

Office européen des brevets

(11) Publication number: 0 388 034
A2

# (12) EUROPEAN PATENT APPLICATION

(21) Application number: 90301939.6

(22) Date of filing: 23.02.90

(51) Int. Cl.5: H04Q 7/04, H04M 1/72, H04B 7/26

(30) Priority: 14.03.89 GB 8905852

(43) Date of publication of application:
19.09.90 Bulletin 90/38

(84) Designated Contracting States:
AT BE CH DE DK ES FR GB GR IT LI LU NL SE

(71) Applicant: FERRANTI CREDITPHONE LIMITED
St. Mary's Road
Moston, Manchester M10 OBE(GB)

(72) Inventor: Buisseret, Timothy J.
29 Bevill Square, St. Stephens
Salford, Lancashire M3 6BB(GB)
Inventor: Pickin, John R.
Keeper's Cottages, Henshaw Lane,
Siddington
Macclesfield, Cheshire SK11 9JW(GB)

(74) Representative: Morton, Colin David et al
Keith W Nash & Co. Pearl Assurance House
90-92 Regent Street
Cambridge CB2 1DP(GB)

(54) Telephone systems.

(57) A telephone system comprises a plurality of base stations (26, 30) all connected to a public switched telephone network (PSTN) and a plurality of groups of handsets (12, 34). Each group of handsets (12, 34) is associated with a corresponding one of the base stations (26, 30) by virtue of each base station being equipped to identify and receive a call from the PSTN for any handset of the corresponding group. The handsets of a particular group communicate by means of a radio link with the corresponding base station, thereby avoiding the need for any hard wiring between the base stations (26, 30) and the handsets (12, 34).

EP 0 388 034 A2

Fig. 2

## Telephone Systems

### Field of the invention

This invention relates to telephone systems comprising a plurality of base stations all connected to a public switched telephone network (PSTN) and a plurality of handsets capable of establishing communication with the base stations by a radio link.

### Background to the invention

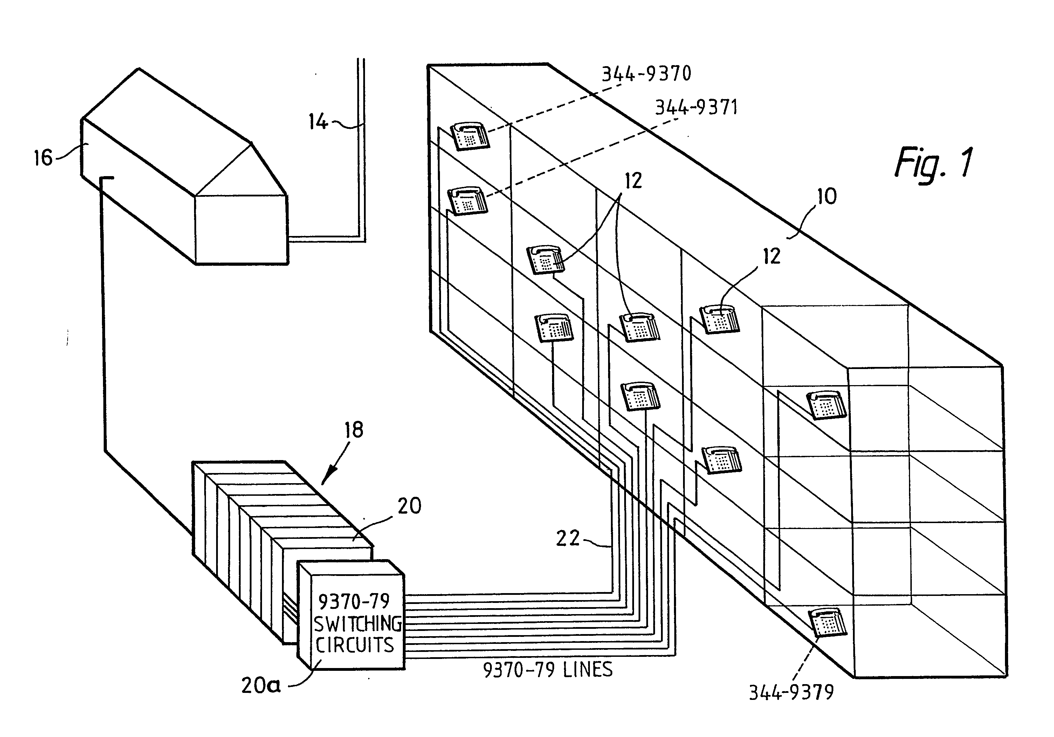

An example of a known telephone system is illustrated in Figure 1 of the accompanying drawings. The system serves a block of flats 10 which is shown as having ten handsets 12 to which are respectively accorded the telephone numbers 061 344 9370 to 79. A trunk connection 14 is linked to a main exchange 16 which routes calls having prefix 061 to a local exchange 18 which responds to calls having the digits 344 as their local code. The local exchange 18 includes a block 20 of switching circuits one of which is shown at 20a and handles the calls for the ten handsets bearing the numbers 9370 to 79. This block 20 of switching circuits is respectively connected by ten individual lines 22 to the ten handsets 12. Hence each handset 12 is connected to the local exchange 18 by its own telephone line which in practice is represented by a twisted pair of copper wires.

The provision of an individual line for each handset 12 requires the use of a lot of hard wiring which must be routed from the local exchange to the block of flats and then internally within the block to each individual handset. This is inefficient because at any given moment it is statistically very unlikely that all the lines 22 will be occupied. Given the small percentage of the time that any one line will be occupied, it follows that most of the lines are redundant most of the time. The invention tackles this disadvantage of known telephone systems by the provision of a base station with which any handset of the group can communicate by means of a radio link.

### Summary of the invention

According to the invention a telephone system comprises a plurality of base stations all connected to a PSTN, a plurality of groups of handsets, with each handset being identified by a telephone number accorded to the handset by the PSTN operator, each group of handsets being associated with a corresponding one of the base stations by virtue of each base station being equipped to identify and receive a call from the PSTN for any handset of the corresponding group, and each handset being capable of establishing a radio link with the corresponding base station. Hence, in the inventive telephone system the handsets of a particular group of handsets communicate by means of a radio link with a corresponding base station, thereby avoiding the need for any hard wiring between the base station and the handsets.

Each base station is preferably linked by wiring to the PSTN, the wiring to each base station providing fewer lines than the number of handsets in the corresponding group. This saves on the cost of the hard wire link between the PSTN and each base station and recognises the fact that at any one time it is statistically unlikely that all the handsets of the corresponding group will be in use. It will be appreciated that if the number of lines between the PSTN and the base station is reduced too far there will be a greater chance of all the lines being occupied which would mean that any additional ingoing or outgoing call could not be accommodated. In the case of a small block of flats having about ten handsets it is thought that there would be sufficient capacity with four lines between the PSTN and the serving base station which would then have the capacity to operate on four channels simultaneously.

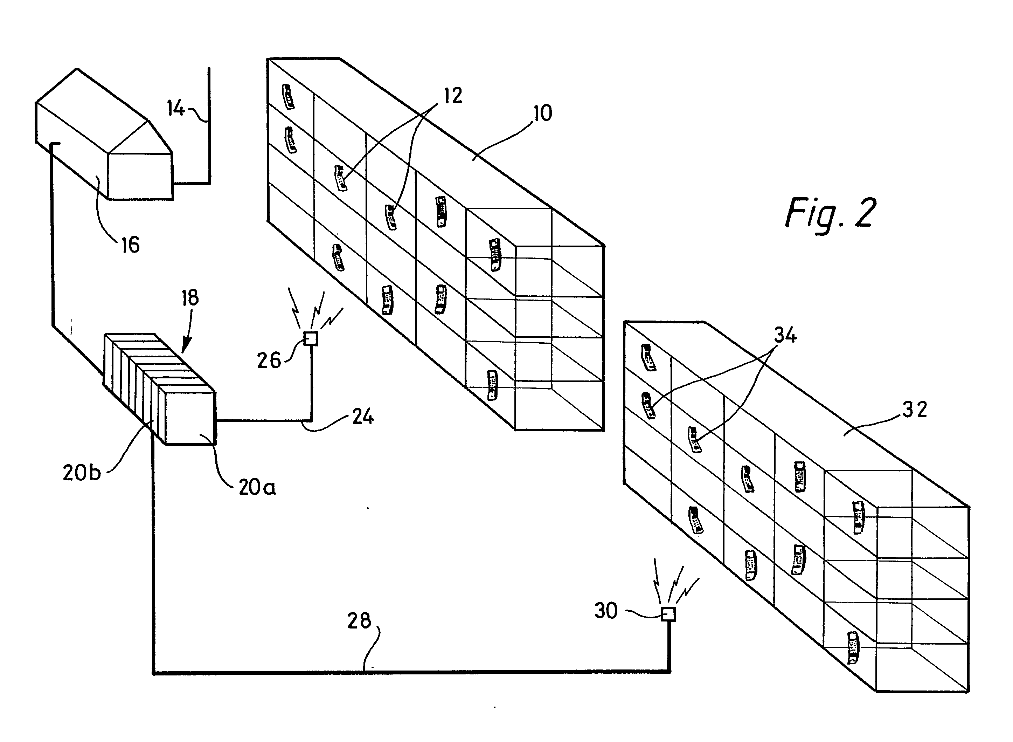

A telephone system according to the invention will now be described by way of example with reference to Figure 2 of the accompanying drawings.

In Figure 2 the main exchange 16 and the local exchange 18 correspond to the similarly numbered components shown in Figure 1. The block 20a serves the ten handsets 12 which are again allocated the numbers 9370 to 9379 by the PSTN operator. The block 20a is linked by four hard-wired lines 24 to a first base station 26. A further block 20b of switching circuits handles the telephone numbers 9360 to 9369 and is similarly linked by four hard-wired telephone lines 28 to a second base station 30. The first base station 26 is positioned so as serve the first block of flats 10 having the ten handsets to which are accorded the respective telephone numbers 0613449370 to 9379. The second base station 30 is positioned so as to serve a second block of flats 32 including a second group of telephone handsets 34 to which are accorded the respective telephone numbers 061 344 9360 to 69.

The ten handsets 12 in the first block of flats 10 form a first group of handsets which are associated with the first base station 26 by virtue of the fact that the first base station is equipped to identify and receive calls for any one of the ten telephone numbers 061 344 9370 to 79. This identification is achieved by the base station 26 having a store which holds the ten telephone numbers 9370 to 79 registered on that base station. It will be appreciated that the calls received by the base station could either be routed as trunk calls through the main exchange or could be local calls through the local exchange.

Similarly, the handsets 34 in the second block of flats 32 form a second group of handsets which are associated with the second base station 30 by virtue of the second base station 30 being equipped to identify and receive calls for any one of the telephone numbers 061 344 9360 to 69.

Each of the base stations 26 and 30 has four channels and is connected to the local exchange by four lines. Hence each base station has a maximum capacity of four calls at any given time, but this should be sufficient for ten domestic handsets. The number of channels relative to the number of handsets would be increased when the handsets are in business use. In all cases, however, the invention avoids the need for hard wiring between the base station and the handsets, which may be mobile handsets capable of making outgoing calls through base stations other than the "home" base station with which the handset is associated and at which it is registered.

Each handset owner may make prepayments, details of which are stored in the corresponding base station, the amount in credit being decremented as each call is made.

Alternatively, the telephone system to which the base stations are connected may store the call charge information.

## Claims

1. A telephone system comprising a plurality of base stations all connected to a public switched telephone network (PSTN), a plurality of groups of handsets, with each handset being identified by a telephone number accorded to the handset by the PSTN operator, each group of handsets being associated with a corresponding one of the base stations by virtue of each base station being equipped to identify and receive a call from the PSTN for any handset of the corresponding group, and each handset being capable of establishing a radio link with the corresponding base station.

2. A telephone system according to claim 1, wherein each base station is linked by wiring to the PSTN, the wiring to each base station providing fewer lines than the number of handsets in the corresponding group.

3. A telephone system according to claim 1 or 2, wherein at least certain of the handsets are portable handsets of a cordless telephone system.

4. A telephone system according to claim 3, wherein the handsets are capable of making outgoing calls through base stations other than the corresponding base station.

Fig. 1

*Fig. 2*

EP 0 388 034 A2